# EUROPÄISCHE PATENTANMELDUNG

(11) **EP 1 640 911 A1**
(43) Veröffentlichungstag der Anmeldung: **29.03.2006**
(21) Anmeldenummer: 04023060.9
(22) Anmeldetag: 28.09.2004
(51) Int. Cl.: G06T 7/00

(54) **Verfahren zum Erkennen von Rote-Augen-Defekten in digitalen Bilddaten von fotografischen Aufnahmen**

(71) Anmelder: AgfaPhoto GmbH, 51373 Leverkusen (DE)
(72) Erfinder: Meckes, Günter, 81477 München (DE)

(57) **Zusammenfassung**

Die Erfindung betrifft ein automatisches Verfahren zum Erkennen von Rote-Augen-Defekten in digitalen Bilddaten von fotografischen Aufnahmen. Hierbei ist für die Suche nach den Rote-Augen-Defekten eine Durchmusterung vorgeschaltet, bei der innerhalb der gesamten Aufnahme nach Makrobereichen gesucht wird. Voraussetzung für das Auftreten von Rote-Augen-Defekten in der Aufnahme ist nämlich das Vorkommen derartiger Markobereiche. Die Durchmusterung wird hierbei auf einem Durchmusterungsgitter vorgenommen. Um das Rote-Augen-Erkennungsverfahren effizienter zu gestalten werden die bei der Durchmusterung ermittelten Gitterpunkte des Durchmusterungsgitters, welche für die Makrobereiche charakteristische Eigenschaften aufweisen, als Ausgangspunkte verwendet werden, um die Gesamtfläche der Makrobereiche anhand eines feineren Gitters oder der Bilddaten zu identifizieren.

## Beschreibung

Die Erfindung betrifft ein Verfahren zum Erkennen von Rote-Augen-Defekten in fotografischen Bilddaten nach dem Oberbegriff von Anspruch 1.

Bei mit Blitzlicht fotografierten Personenaufnahmen, insbesondere mittels digitaler Kameras, kommt es immer wieder zum Auftreten von sogenannten Rote-Augen-Defekten, also roten Lichtreflexen innerhalb der Iris der aufgenommenen Person. Um diese Rote-Augen-Defekte zu vermeiden bzw. zu korrigieren gibt es verschiedene Ansätze. So gibt es viele Kameras, die vor der eigentlichen Aufnahme vorblitzen, so dass sich die Pupille der aufgenommenen Person schließt und der Rote-Augen-Defekt vermieden wird. Ferner werden Verfahren angeboten, bei denen bei einem am Monitor angezeigten Bild Rote-Augen-Defekte manuell gekennzeichnet werden und ein Korrekturprogramm diese Defekte dann korrigiert. Ferner gibt es im Bereich von Laborgeräten, welche bis zu einigen tausend Bildern pro Stunde drucken, Verfahren, bei denen derartige Rote-Augen-Defekte automatisch erkannt und korrigiert werden.

Die vorliegende Erfindung ist für Rote-Augen-Defekt-Erkennungsverfahren im Bereich von derartigen Hochleistungslaborgeräten angesiedelt. Rote-Augen-Defekt-Erkennungsverfahren in diesem Bereich müssen vor allem sehr schnell arbeiten, da durch das Erkennen und Korrigieren von Rote-Augen-Defekten im Rahmen der Bildverarbeitung die Leistung eines derartigen Hochleistungsgeräts nicht reduziert werden soll. Gleichzeitig soll die Erkennungsrate von Rote-Augen-Defekten aber möglichst hoch sein und insbesondere die Fehlerkennungsrate sehr gering.

Zu diesem Zweck wurde beispielsweise das in der EP 0 961 225 beschriebene Rote-Augen-Defekt-Erkennungsverfahren entwickelt. In dieser Schrift wird vorgeschlagen, zum Erkennen von Rote-Augen-Defekten zunächst Gebiete zu suchen, die Hauttöne aufweisen, da Rote-Augen-Defekte nur in Gesichtern von Personen zu suchen sind. Diese Hauttonregionen werden anschließend auf Gesichtsähnlichkeit hin geprüft und schließlich werden innerhalb der verbleibenden möglichen Gesichter Rote-Augen-Kandidaten gesucht. Um mögliche Rote-Augen-Kandidaten zu verifizieren, wird die Umgebung dieser Kandidaten mit Augentemplates verglichen. Dieses Verfahren ist sehr aufwändig und für den Einsatz in Hochleistungsbelichtern nicht geeignet.

Deshalb wurde in der EP 1 293 933 eine Modifikation eines derartigen Verfahrens vorgeschlagen. Um Rechenzeit zu sparen und derartige Rote-Augen-Erkennungsverfahren für Hochleistungsbelichter nutzbar zu machen, wird in dem dort beschriebenen Verfahren vorgeschlagen, einen Teil der Verfahrensschritte auf einem niedrig aufgelösten Bilddatensatz vorzunehmen. So soll beispielsweise auf diesem niedrig aufgelösten Datensatz überprüft werden, ob überhaupt Hauttöne in diesem Bild vorhanden sind, so dass ein detaillierter Rote-Augen-Suchalgorithmus auf dieses Bild anzuwenden ist. Je schneller und leistungsfähiger jedoch das Erkennungsverfahren sein soll, um so niederer muss die Auflösung des zu untersuchenden Datensatzes gewählt werden. Wird die Auflösung zu niedrig gewählt, besteht allerdings die Gefahr, dass im Bild vorhandene Hauttöne übersehen werden und deshalb in vielen Bildern die Rote-Augen-Defekte gar nicht gesucht werden. Es ist schwierig, bei dieser Lösung ein Optimum zu finden, bei dem die Bearbeitungszeit des jeweiligen Bildes möglichst gering ist, die Gefahr, dass ein Bild, das derartige Objekte aufweist, übersehen wird aber nicht zu groß wird.

Aufgabe der Erfindung war es deshalb, ein effizientes Rote-Augen-Erkennungsverfahren zu entwickeln, bei dem die Bearbeitungszeit vieler Bilder möglichst gering ist, gleichzeitig aber die Erkennungsrate von Rote-Augen-Defekten im einzelnen Bild möglichst hoch bleibt.

Gelöst wird diese Aufgabe durch ein Verfahren, wie es in Anspruch 1 beschrieben ist.

Die Erfindung basiert darauf, dass im Rahmen eines Rote-Augen-Defekt-Erkennungsverfahrens vor der eigentlichen Suche nach roten Augen innerhalb des zu untersuchenden Bildes nach Objekten gesucht wird, deren Vorhandensein Voraussetzung für das Auftreten von Rote-Augen-Defekten ist. Als mögliche zu suchende Objekte oder Makrobereiche für die Durchmusterung kommen Hautbereiche in Frage, es können aber auch Haare, Gesichter an sich oder aber Personen direkt z. B. mittels Objekterkennungsverfahren gesucht werden. Als zu suchende charakteristische Eigenschaften wird auf Farbe, Dichte, Helligkeit, etc. der Punkte abgestellt.

Um diese vorgezogene Durchmusterung möglichst effizient durchzuführen, werden erfindungsgemäß die bei der Durchmusterung als für die Makrobereiche charakteristische Punkte ermittelten Gitterpunkterpunkte zusätzlich verwendet, um Lage und Größe der Makrobereiche im Bild zu bestimmen. Die vollständige Identifikation der Makrobereiche erfolgt jedoch vorteilhafterweise nicht auf dem Durchmusterungsgitter, da dieses, um Rechenzeit zu sparen, verhältnismäßig wenige Punkte aufweisen soll und somit sehr grob gewählt wird. Anstatt die Rechenzeit hochzutreiben, indem die Anzahl der Gitterpunkte des Durchmusterungsgitters erhöht wird, wird an dieser Stelle ein besonders vorteilhafter Verfahrensschritt angewandt. Zum Ermitteln der Gesamtfläche der Makrobereiche wird innerhalb des zu bearbeitenden Bildes lokal auf ein feineres Gitter oder die aufgenommenen Bilddaten selbst zurückgegriffen. Das feinere Gitter kann dem Durchmusterungsgitter ähnlich sein, wobei es jedoch wesentlich mehr Gitterpunkte aufweist, es kann sich aber auch um ein lokales Gitter handeln, welches nur in der Umgebung der ermittelten charakteristischen Gitterpunkte aus den Bildpunkten extrahiert wird, es kann aber auch einfach ein niedriger aufgelöster Datensatz der Bilddaten als feineres Gitter verwendet werden. Wichtig ist nur, dass die Anzahl der Gitterpunkte des feinen Gitters so groß ist, dass Makrobereiche, welche ein für die Rote-Augen-Erkennung relevante Größe aufweisen, in dem feinen Gitter im Wesentlichen vollständig und flächendeckend identifiziert werden. Es können auch die vollständigen Bilddaten selbst verwendet werden, allerdings ist es effizienter, auch hier auf ein Gitter zurückzugreifen.

Um die ermittelten Punkte des Durchmusterungsgitters als Ausgangspunkte für die flächendeckende Ermittlung der Makrobereiche zu verwenden, ist erforderlich, dass eine fest definierte und bekannte Zuordnung zwischen den Punkten des Durchmusterungsgitters und den Punkten des feineren Gitters bzw. den Bildpunkten besteht. Dadurch ist es möglich, von jedem Ausgangspunkt im Durchmusterungsgitter auf den entsprechenden Punkt im feinen Gitter bzw. den entsprechenden Bildpunkt zu springen, der dann, je nach Wahl des Durchmusterungsgitters, alleine oder in Kombination mit seinen Nachbarpunkten ebenfalls die charakteristischen Eigenschaften der gesuchten Makrobereiche aufweist. Sobald dieses Umschalten von einem zum anderen Gitter geschehen ist, kann ausgehend von dem zugeordneten Punkt innerhalb des feineren Gitters oder der Bildpunkte, die Umgebung dieses Ausgangspunktes auf das Vorliegen der charakteristischen Eigenschaften der Makrobereiche abgesucht werden. Im feineren Gitter bzw. im Bilddatensatz selbst lassen sich dann dabei alle in der Umgebung vorhandenen Punkte ermitteln, welche ebenfalls Mitglieder der Makrobereiche sind, bis schließlich der gesamte Makrobereich in der Umgebung des jeweiligen, dem Ausgangspunkte zugeordneten Kristallationspunkt ermittelt ist.

Die ermittelten Punkte des Durchmusterungsgitters, nicht nur zur Klassifizierung des Bildes als möglicherweise relevant für die Rote-Augen-Suche, sondern gleich als Ausgangspunkte zur vollständigen Identifizierung der Makrobereiche zu verwenden, ist besonders vorteilhaft, da damit ein weiterer Suchschritt und somit Rechenzeit gespart wird, die darauf verwendet werden kann, das Durchmusterungsgitter selbst etwas feinmaschiger anzulegen. Dadurch, dass für die vollständige Identifikation des Makrobereiches dann auf ein feineres Gitter bzw. die Bilddaten selbst zurückgegriffen wird und diese nicht auf dem Durchmusterungsgitter erfolgt, ist es wiederum möglich, das Durchmusterungsgitter mit vergleichsweise wenig Punkten zu realisieren. Würde man anhand des Durchmusterungsgitter versuchen, die gesamten Makrobereiche aufzufinden, so müssten viel mehr Punkte für das Durchmusterungsgitter vorgesehen werden. Diese Vielzahl von Punkten müsste dann aber auch jedes Mal überprüft werden, wenn überhaupt keine Punkte mit den Eigenschaften der Makrobereiche in Bildern zu finden sind, was eine Verschwendung von Rechenzeit wäre und das Erkennungsverfahren als für Hochleistungsprinter ungeeignet erscheinen ließe.

Die notwendig Anzahl der Punkte des Durchmusterungsgitters kann also ausschließlich in Abhängigkeit davon gewählt werden, dass Objekte bzw. Makrobereiche ab einer bestimmten Größe mit Sicherheit ermittelt werden sollen, wobei dies auf die zur Verfügung stehende Rechenzeit pro Bild optimiert wird. Das Durchmusterungsgitter muss also nicht so fein sein, dass das Ausmaß des gesamten Makrobereichs ersichtlich wird, es ist ausreichend, jeweils nur einen Punkt des Makrobereichs mit Sicherheit zu finden. Genauere Eigenschaften des Makrobereichs bzw. dessen gesamtes Ausmaß können dank der festen Zuordnung zwischen Gitterpunkt des Durchmusterungsgitters und Gitterpunkt des feinen Suchgitters bzw. Bildpunkt, dann auf dem feineren Gitter bzw. dem Bilddatensatz oder auch nur einem Ausschnitt aus diesen jeweiligen Sätzen in der Umgebung des zugeordneten Ausgangspunktes untersucht werden.

Eine vorteilhafte Möglichkeit dafür den einem Ausgangspunkt zugehörigen Makrobereich vollflächig zu ermitteln, besteht darin, auf dem feineren Gitter oder den Bilddaten in einer festgelegten Umgebung, um den Ausgangspunkt herum, alle Punkte zu ermitteln, welche ebenfalls die für die Makrobereiche charakteristischen Eigenschaften aufweisen. Die Größe der zu untersuchenden Umgebung wird in diesem Fall vorteilhafterweise anhand des auf das feine Gitter bzw. die Bilddaten übertragenen Gitterabstands des Durchmusterungsgitters festgelegt. So ist es oftmals vorteilhaft, die Umgebung bis zu dem, dem nächsten Gitterpunkt des Druchmusterungsgitters entsprechenden Punkt, welcher nicht mehr die charakteristischen Eigenschaften der Makrobereiche aufweist, näher zu betrachten. Alle dabei im feinen Gitter oder den Bilddaten identifizierten Punkte, welche die charakteristischen Eigenschaften der Makrobereiche aufweisen, werden dann als zum Makrobereich zugehörig festgehalten. Sicherheitshalber könnte bei diesem Vorgehen aber auch eine zu untersuchende Umgebung gewählt, welche in ihrer Größe deutlich über einen Gitterabstand hinaus geht. Hierdurch ist es möglich, zu den Makrobereichen zugehörige Punkte zu identifizieren, welche zufälligerweise gerade nicht mit den Punkten des Durchmusterungsgitters in der Umgebung des Ausgangspunkts zusammentreffen und deswegen nicht die Eigenschaften der Makrobereiche haben und somit in der Durchmusterung nicht ermittelt wurden. Bei diesem Vorgehen können auch kleinere abgeschnittene Bereiche, welche aber eigentlich noch zu dem jeweiligen Makrobereich gehören, die aber nicht direkt mit den Makrobereichen verbunden sind, ebenfalls gefunden werden und mehrere von diesen lassen sich zu einem Makrobereich zusammenschließen. Hierdurch ist es einfach möglich, beispielsweise ein Gesicht als einen einzigen Makrobereich zu identifizieren und festzuhalten, auch wenn beispielsweise ein breites Brillengestell das Gesicht in zwei Teile unterteilt. Fehlstellen innerhalb der Makrobereiche werden hierbei also einfach automatisch überwunden.

Eine weitere sehr vorteilhafte Methode, ausgehend von dem, anhand des Durchmusterungsgitters ermittelten, Ausgangspunkt in dem feinen Gitter oder den Bilddaten die Makrobereiche zu suchen, besteht darin, den dem Ausgangspunkt zugeordneten Punkt des feinen Gitters oder Bildpunkt als Kristallisationspunkt zu verwenden und ähnlich wie beim Kristallwachstum Makrobereiche um diesen Kristallisationspunkt wachsen zu lassen. Hierbei werden alle mit dem Kristallisationspunkt in Verbindung stehenden Punkte des feinen Gitters oder Bildpunkte als zum Makrobereich zugehörig festgehalten, welche die charakteristische Eigenschaft aufweisen. Da die charakteristischen Bereiche im Allgemeinen nicht völlig homogen sind, wird hierbei vorteilhafterweise eine gewisse Variation der charakteristischen Eigenschaft zugelassen. So werden Bänder bzw. Schwellwerte angegeben, innerhalb derer die gesuchte Eigenschaft als erfüllt gilt und erst bei deren Überschreiten wird der jeweilige Punkt als nicht mehr zum Makrobereich zugehörig gekennzeichnet. Vorteilhaft an diesem Vorgehen ist, dass auch Ausläufer von den Makrobereichen ermittelt werden, welche nicht direkt in der Umgebung des Ausgangspunkts liegen und die auch mit keinem anderen Gitterpunkt des Durchmusterungsgitters zusammentrafen, ohne dass dafür eine beliebig große Umgebung oder das gesamte Bild zu untersuchen wäre, wie das in der ersten Variante dieser Feinsuche erforderlich ist. Nachteilig ist hierbei jedoch, dass Fehlstellen in den Makrobereichen, welche den Zusammenhang mit dem Ausgangspunkt vollständig abschneiden, wie breite Brillengestelle in Gesichtern durch zusätzliche Modifikationen überwunden werden müssen. Hier ist beispielsweise vorstellbar, dass vorsichtshalber immer in einer bestimmten Entfernung am Rand der Makrobereiche nochmals überprüft wird, ob sich nicht ein weiterer Teil des Makrobereichs nach einer derartigen Fehlstelle anschließt.

In einer vorteilhaften Ausführungsform des Verfahrens werden die Gitterpunkte des Durchmusterungsgitters direkt aus dem Fundus der Punkte des feinen Gitters oder der Bildpunkte ausgewählt und übernommen. Dies kann dadurch geschehen, dass diese Punkte direkt als Durchmusterungsgitter abgespeichert werden, es ist aber auch möglich, nur die Adressen der Gitterpunkte in dem feinen Gitter oder innerhalb der Bilddaten festzuhalten, um so die Gitterpunkte des Durchmusterungsgitters festzulegen. Damit besteht das Durchmusterungsgitter gewissermaßen in einem Raster, welches über das feine Suchgitter oder die Bilddaten gelegt ist, wobei das Raster auch in einer Adressliste realisiert sein kann. Hierbei werden im Rahmen der Durchmusterung also Punkte untersucht, welche Originalpunkte des feinen Gitters oder noch besser, der Bilddaten sind. Dies hat den Vorteil, dass die Eigenschaften dieser Punkte zur Überprüfung der charakteristischen Eigenschaften der Makrobereiche im unverfälschten Originalzustand erhalten sind. Der Vorteil einer reinen Adresszuweisung für die Bildung des Durchmusterungsgitters besteht darin, keinen extra Speicheraufwand zu benötigen, um gewissermaßen das Gitter physikalisch aufzubauen.

Eine weitere vorteilhafte Variante zur Bildung des Durchmusterungsgitters besteht darin, mehrere benachbarte Punkte des feinen Gitters oder der Bildpunkte zu jeweils einem Gitterpunkt des Durchmusterungsgitters zusammenzufassen. Hierbei kann beispielsweise der Mittelwert aus allen Punkten genommen werden, es sind aber auch andere Wichtungen allgemein bekannter Art vorstellbar. Vorteilhaft an dieser Form der Bildung der Gitterpunkte des Durchmusterungsgitters ist, dass die Eigenschaften mehrerer Punkte in einem Gitterpunkt mit einfließen. Hierdurch steigt die Wahrscheinlichkeit einen Punkt mit den charakteristischen Eigenschaften innerhalb eines Makrobereiches mit einem Gitterpunkt zu finden, da ausgeschlossen wird, dass zufälligerweise ein einzelner Punkt als Durchmusterungsgitterpunkt ausgewählt wird, welcher gerade nicht die Eigenschaften des Makrobereichs aufweist, obwohl er innerhalb des Makrobereichs liegt. Leider werden hierbei aber auch die Eigenschaften der Punkte verändert. Der Gitterpunkt des Durchmusterungsgitters hat nicht mehr die Eigenschaften der einzelnen zugeordneten Punkte des feinen Gitters oder der Originalbilddaten. Hierbei kann es wiederum geschehen, dass ein Punkt des Durchmusterungsgitters nicht als zu einem Makrobereich zugehörig erkannt wird, da er beispielsweise am Rand des Makrobereiches liegt und bei seiner Bildung Punkte, die innerhalb des Makrobereichs liegen, mit Punkten von außerhalb des Makrobereichs verknüpft wurden. Ferner muss bei dieser Variante die Zuordnung vom Gitterpunkt des Durchmusterungsgitters zu einem aus mehreren Punkten auswählbaren Punkt des feinen Gitters oder Bildpunkt erfolgen, so dass ein definierter Ausgangspunkt für das Formen des Makrobereichs zur Verfügung steht. Prinzipiell kann hierfür jeder der ursprünglichen Punkte genommen werden, es ist jedoch vorteilhaft, beispielsweise den mittleren der anschließend zusammengefassten Punkte als Zuordnungspunkt festzulegen.

Eine einfache vorteilhafte Variante eines Durchmusterungsgitters besteht darin, die Gitterpunkte des Durchmusterungsgitters äquidistant über das Bild zu verteilen. Hierdurch ist gewährleistet, dass die Wahrscheinlichkeit dafür, einen bestimmten Makrobereich zu finden, nur von der Größe des Makrobereichs und seiner Lage relativ zu den Gitterpunkten abhängt, nicht aber von seiner Position im Bild.

Eine weitere vorteilhafte Möglichkeit zur Bildung des Durchmusterungsgitters besteht darin, die Gitterpunkte ungleichmäßig über das Bild zu verteilen. Dadurch dass die Gitterpunkte ungleichmäßig über das Bild verteilt werden, ist es möglich, das Gitter so zu gestalten, dass nur eine sehr geringe Zahl von Gitterpunkten zu untersuchen ist, gleichzeitig aber die Dichte der Gitterpunkte in Bereichen des Bildes in denen es wichtig ist vorhandene Objekte zu finden relativ hoch zu wählen. Die Erkenntnis, die dieser Erfindung zu Grunde liegt ist, dass es nicht effizient genug ist eine derartige Vorabsuche auf einem gleichmäßigen Gitter, wie es durch ein niedrig aufgelöstes Bild repräsentiert wird, vorzunehmen. Bei einem gleichmäßig über das Bild verteilten Gitter ist es nämlich sehr schwer bzw. oftmals unmöglich, einen sinnvollen Kompromiss zwischen möglichst wenigen Gitterpunkten und einer hohen Erkennungsrate zu finden. Indem ein Gitter mit nicht äquidistanten Gitterpunkten kreiert wird, kann die Sicherheit für die Erkennungsrate in den Bereichen im Bild durch eine erhöhte Anzahl von Gitterpunkten gesteigert werden, in denen eine Erkennung von Rote-Augen-Defekten besonders wichtig ist, während die Anzahl von Gitterpunkten in anderen Bereichen deutlich herabgesetzt werden kann.

Besonders vorteilhaft ist es, in bildwichtigen Bereichen ein engeres Gitter zu wählen. Bildwichtige Bereiche sind solche, denen ein Betrachter des Bildes in der Regel mehr Aufmerksamkeit zukommen lässt, als dem Rest des Bildes. Es sind die Bereiche, die die Bildinformation enthalten, die für die Aufnahme wesentlich ist, wie z. B. Bildbereiche von Portraits bei Personenaufnahmen. Diese bildwichtigen Bereiche sind auch die Bereiche, in denen dem Betrachter eines Bildes Rote-Augen-Defekte besonders negativ auffallen. Deshalb ist es vorteilhaft, in diesen Bereichen mehr Gitterpunkte vorzusehen, um dort die Gefahr ein Objekt mit Rote-Augen-Defekten bei der Korrektur zu übersehen, möglichst gering zu halten. In anderen nicht bildwichtigen Bereichen kann dagegen die Anzahl der Gitterpunkte deutlich geringer gewählt werden, da es als nicht so störend empfunden wird, in diesen Bereichen Rote-Augen-Defekte zu belassen.

Als ein besonders wichtiger Bereich im Bild hat sich der mittlere Bereich des Bildes erwiesen. Nahezu jeder, der ein Bild betrachtet, sieht zuerst in das Zentrum des Bildes. Außerdem versuchen die meisten Fotografen Gesichter, die sie aufnehmen wollen, im Mittelpunkt des Bildfeldes anzuordnen. Deshalb ist davon auszugehen, dass Rote-Augen-Defekte in Gesichtern, welche sich im Zentrum des Bildes befinden, als besonders störend empfunden werden, da die roten Augen in diesem Bereich im Allgemeinen zu Personen gehören, die dem aufnehmenden Fotografen wichtig sind. Gesichter in den peripheren Bereichen des Bildes erscheinen zumeist unwichtiger, so dass deren Fehlerhaftigkeit als weniger störend empfunden wird.

Ferner ist es vorteilhaft, im oberen Bereich des Bildes mehr Gitterpunkte vorzusehen als im unteren. Die meisten Gesichter, bei denen Rote-Augen-Defekte als störend empfunden werden, befinden sich nämlich in dem oberen Teil des Bildes. Welcher Teil des Bildes der obere ist, wird bei neueren digitalen Kameras festgehalten und kann mit zum Bild zugehörigen Metadaten mit den Bilddaten an das Bildverarbeitungsprogramm übertragen werden.

Es können selbstverständlich auch andere Bildbereiche als bildwichtig definiert werden. Im Allgemeinen ist jedoch davon auszugehen, dass die äußersten Ränder des Bildes als weniger wichtig für das Bild empfunden werden. Somit können hier weniger Gitterpunkte verwendet werden. Dennoch sollten diese Bereiche auf jeden Fall von dem Durchmusterungsgitter überdeckt werden, da ein vollständiger Verzicht auf eine Korrektur im Randbereich nicht tragbar ist. So ist es möglich, dass sich bei manchen Aufnahmen sehr starke Rote-Augen-Defekte größerer Portraitaufnahmen am Rand des Bildes befinden. Diese werden als äußerst störend empfunden, obwohl der Rote-Augen-Defekt nicht in bildwichtigen Bereichen des Bildes liegt. Da Rote-Augen-Defekte am Rand des Bildes aber im Allgemeinen nur dann als sehr störend empfunden werden, wenn es sich um Defekte in größeren Gesichtern handelt, ist es ausreichend hier sehr wenige Gitterpunkte für die vorgezogene Durchmusterung vorzusehen.

Innerhalb der Bereiche unterschiedlicher Gitterabstände können die Gitterpunkte dann jeweils wieder äquidistant angeordnet sein. Vorteilhafter ist es jedoch, wenn die Gitterpunkte zumindest in den Bereichen engmaschigerer Gitter so angeordnet werden, dass der Abstand zwischen zwei Gitterpunkten jeweils zum Zentrum der Bereiche hin abnimmt. Zum Zentrum bildwichtiger Bereiche hin werden rote Augen zunehmend als störender empfunden. Deshalb ist es sinnvoll, zum Zentrum hin die Erkennung von Objekten, welche möglicherweise Rote-Augen-Defekte enthalten, zuverlässiger zu gestalten. Werden in der vorab vorgenommenen Durchmusterung beispielsweise Gesichter gesucht, wobei der mittlere Bildbereich als bildwichtig klassifiziert wird, so wäre es sinnvoll, ein Durchmusterungsgitter so aufzubauen, dass der Gitterabstand zum Zentrum des Bildes hin stetig abnimmt. Dadurch wäre gewährleistet, dass in den äußeren Bildbereichen möglichst wenig Gitterpunkte und damit Rechenzeit investiert wird, während im Bildzentrum aber sogar sehr kleine Gesichter auf Rote-Augen-Defekte hin untersucht werden.

Eine weitere besonders vorteilhafte Anordnung der Gitterpunkte besteht darin, die Abstände zwischen den von oben nach unten im Bild verlaufenden Gitterpunkten größer zu wählen als den Abstand der im Bild von rechts nach links verlaufenden Gitterpunkte. Da es sich bei den Makroobjekten, die vor der Rote-Augen-Erkennung gesucht werden, zumeist um Objekte handelt, deren Ausdehnung vertikal größer ist als horizontal, ist diese Anordnung der Gitterpunkte besonders vorteilhaft. Die Ausrichtung des Bildes bei der Aufnahme kann dabei wieder den bei der Aufnahme von der Kamera aufgezeichneten Metadaten übernommen werden.

Es hat sich gezeigt, dass als sinnvoller Abstand zwischen zwei benachbarten Metapunkten in den grobmaschigeren Bereichen vorteilhafterweise zwischen 2 % und 7 % der längeren Bildkante gewählt wird. Damit ergibt sich in Richtung der längeren Bildkante eine Anzahl von wenigstens 17 bis 50 Gitterpunkten. Hierdurch wird ein Mindestmaß an Trefferwahrscheinlichkeit gewährleistet, gleichzeitig aber die Bearbeitungszeit pro Bild auf ein Minimum reduziert.

Besonders vorteilhaft hat sich ein Abstand von etwa 4 % der längeren Bildkante als Abstand zwischen zwei benachbarten Gitterpunkten gezeigt. Dies entspricht einem Gitter mit wenigstens 25 Gitterpunkten entlang der längeren Bildseite.

Insbesondere für die Bearbeitung von hoch aufgelösten Bildern mit ca. 2.000 x 3.000 Bildpunkten muss das Gitter so gewählt werden, dass das Rote-Augen-Erkennungsverfahren mit einem Minimum an Rechenzeit durchgeführt werden kann. Deshalb ist es besonders vorteilhaft für diese Bilder, im Bereich der größten Gitterabstände, höchstens jeden hundertsten Bildpunkt als Gitterpunkt vorzusehen.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: ein Flussdiagramm eines erfindungsgemäßen Rote-Augen-Erkennungs- und Korrekturverfahrens für digitale Bilddaten und
- Fig. 2: in schematisierter Darstellung, Beispiel für ein erfindungsgemäßes Durchmusterungsgitter mit darunter liegenden Bildpunkten und
- Fig. 3: in schematischer Darstellung, entsprechend Fig. 2 ermittelte Makrobereiche.

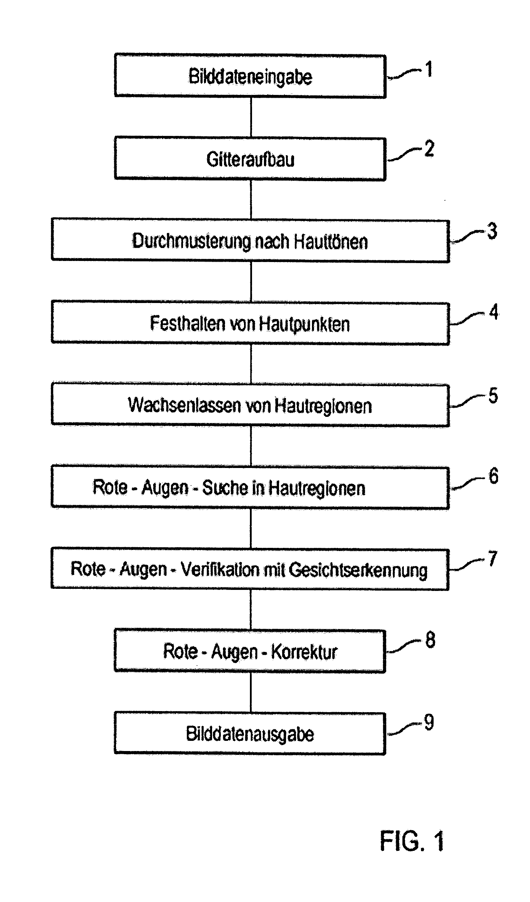

Anhand des Ablaufdiagramms der Fig. 1 werden die für eine Rote-Augen-Korrektur notwendigen Verfahrensschritte beschrieben. Im Verfahrensschritt 1 werden digitale Bilddaten, welche zu korrigieren sind, eingegeben. Die Eingabe der Bilddaten kann beispielsweise durch Abtasten eines herkömmlichen Films mittels eines digitalen Scanners erfolgen. Ebenso gut können die Bilddaten jedoch über Internet, von einer Foto-CD, der Speicherkarte einer digitalen Kamera oder beliebigen anderen Medien, welche digitale Bilddaten enthalten, zur Bearbeitung zugeführt werden. Bei den eingegebenen Bilddaten handelt es sich um digitale Daten von fotografischen Aufnahmen. Diese sollen auf Rote-Augen-Defekte hin untersucht werden, so dass beim Auftreten derartiger Defekte eine Korrektur derselben vorgenommen werden kann. Derartige Rote-Augen-Erkennungs- und Korrekturverfahren sind beispielsweise bei digitalen Bildwiedergabegeräten in den Ablauf einer ganzen Folge von Bildkorrektur- und Verbesserungsverfahren, wie Verschärfung, Dichtekorrektur, Farbkorrekturen oder Ähnliches mit eingebunden. Sie können jedoch ebenso gut als einzelnes Verfahren beispielsweise in einer digitalen Kamera oder auf dem PC verwendet werden. Insbesondere im Zusammenhang mit Bildwiedergabegeräten aber auch bei der Verwendung in digitalen Kameras ist es sehr wichtig, dass diese Rote-Augen-Erkennungsverfahren sehr schnell und dabei mit geringer Fehlerkennungsrate arbeiten. Aus diesem Grund wird der eigentlichen Rote-Augen-Erkennung eine Durchmusterung des Bildes nach Hauttönen vorgeschaltet. Das Suchen nach Hauttönen ist einfacher als die Suche nach Rote-Augen-Defekten, da Hauttöne von Gesichtern als deutlich größere Objekte innerhalb der Bilder auftreten und außerdem eine charakteristischere Färbung aufweisen. Um ein derartiges Hauterkennungsverfahren möglichst effizient zu gestalten, wird für dieses in einem dritten Schritt durchzuführende Hautton-Erkennungsverfahren vorab in einem zweiten Bildverarbeitungsschritt ein Gitter aufgebaut, welches sich für diese spezielle Vorab-Durchmusterung als besonders vorteilhaft erwiesen hat. Dadurch, dass nicht alle Punkte des zu bearbeitenden Bildes durchsucht werden, sondern nur wohldefinierte Gitterpunkte, kann die Bearbeitungszeit für die Durchmusterung des Bildes enorm reduziert werden. Dabei besteht jedoch die Gefahr, einen Rote-Augen-Defekt, der zwischen den Gitterpunkten liegt, zu übersehen. Es hat sich jedoch gezeigt, dass es Defekte im Bild gibt, die als besonders störend empfunden werden und auch solche, die kaum relevant sind. Dies wird beim Aufbau des Gitters berücksichtigt. Durch eine besonders geschickte Wahl des Gitters ist es nämlich möglich, die Gefahr, ein als besonders störend empfundenes Rote-Augen-Paar zu übersehen, ebenso wie die Bearbeitungszeit, möglichst gering zu halten. Hierzu wird ein Gitter für die Durchmusterung aufgebaut, bei dem die Abstände zwischen den Gitterpunkten innerhalb des Bildes varüeren. So werden in Bereichen, in denen es besonders wichtig ist, derartige Rote-Augen-Defekte zu erkennen, mehr Gitterpunkte angeordnet als in den Bildbereichen, in denen Rote-Augen-Defekte als weniger störend empfunden werden.

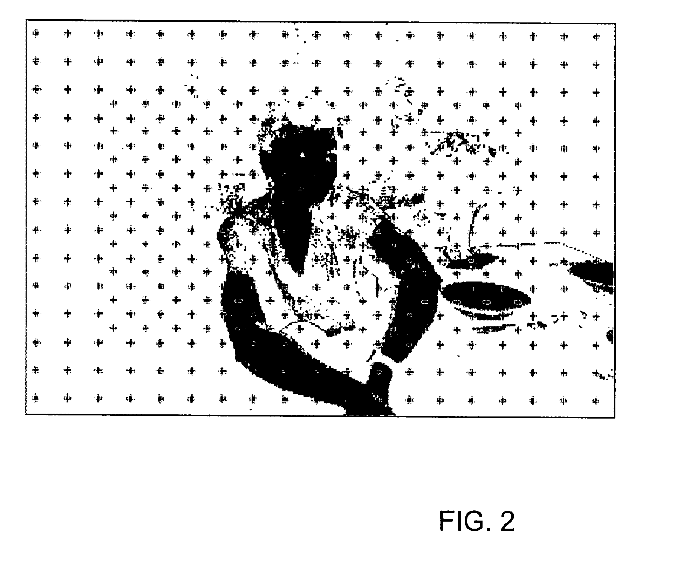

Ein einfaches Beispiel für ein derartiges Gitter ist in Fig. 2 angegeben. Hier sind die Gitterpunkte des Durchmusterungsgitters (als (+) dargestellt) innerhalb zweier unterschiedlicher Bildbereiche unterschiedlich angeordnet. So werden im Randbereich des Bildes, der im Allgemeinen weniger wichtigen Bildinhalt zeigt, Gitterpunkte mit größerem Abstand zueinander angeordnet als im inneren Bereich des Bildes, in dem sich im Allgemeinen der Bildinhalt befindet, den der Fotograf für wichtig für diese Aufnahme empfunden hat. Im zentralen Bereich des Bildes befindet sich somit der bildwichtige Anteil. Hier ist es sinnvoll, mehr Gitterpunkte vorzusehen, da hier auch kleine Gesichter gefunden werden sollen, welche möglicherweise Rote-Augen-Defekte aufweisen können. Im Randbereich ist es dagegen nicht so tragisch, wenn sehr kleine Gesichter nicht korrigiert werden, da diese im Allgemeinen nicht zu Personen gehören, welche der Fotograf erfassen wollte. Dennoch kann das Gitter auch in diesem Bereich nicht beliebig grob gewählt werden, da Rote-Augen-Defekte in größeren Gesichtern auch dann als störend für das Bild empfunden werden, wenn sie am Rand des Bildes liegen.

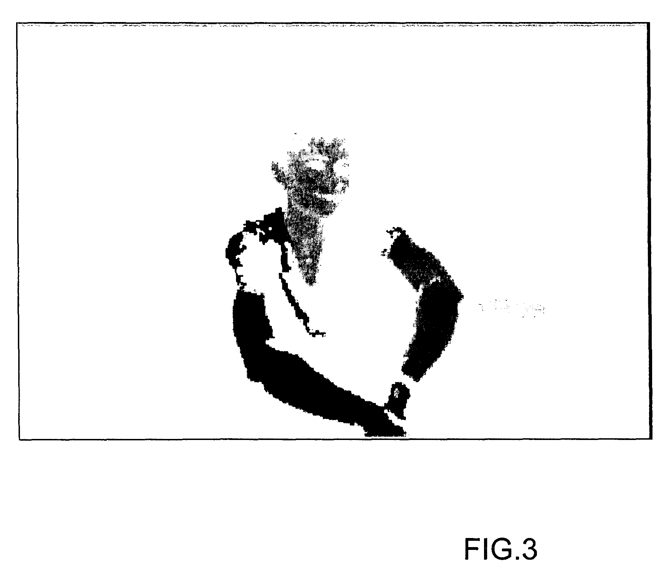

Diese somit zu dem Durchmusterungsgitter zugehörigen Bildpunkte innerhalb des Rote-Augen-Erkennungsverfahrens werden in dem Verfahrensschritt 3 untersucht. Dabei wird geprüft, ob die Farbe des jeweiligen zu untersuchenden Gitterpunktes der Farbe von Hauttönen entspricht. Fällt diese Untersuchung für den jeweiligen Bildpunkt positiv aus, so wird der entsprechende Bild bzw. Gitterpunkt festgehalten. Dies erfolgt in einem Verfahrensschritt 4, in dem sich schließlich ein Muster von über das Bild verteilten hautfarbenen Gitterpunkten ergibt. In einem Verfahrensschritt 5 werden diese hautfarbigen Gitterpunkte als Ausgangspunkte genommen, um von ihnen aus Hautregionen wachsen zu lassen. Dies geschieht dadurch, dass erst einmal der dem hautfarbigen Ausgangspunkt des Durchmusterungsgitters zugeordnete Punkt eines feineren Gitters des Bildes als Kristallationspunkt zur Bildung der Hautregion gewählt wird. Besteht das Durchmusterungsgitter nur virtuell, in Form einer Adressliste, so sind Ausgangspunkt und Kristallationspunkt identisch. Als feineres Gitter wird in diesem Beispiel eine niedrig aufgelöste Variante des ursprünglichen Bildes von 2.000 x 3.000 Bildpunkten gewählt. Das niedrig aufgelöste feinere Gitter beträgt dann beispielsweise 256 x 384 Gitterpunkte. Je nach gewünschter Genauigkeit und Einsparung von Rechenzeit bieten sich hier Gitter mit einer Punktzahl von zwischen 200 x 300 und 600 x 800 Gitterpunkten an. Die größtmögliche Genauigkeit ist gewährleistet, wenn an Stelle des feinen Gitters der aufgenommene Bilddatensatz verwendet wird. Ein Beispiel für ein Durchmusterungsgitter und darunter liegende hautfarbige Bereiche in der Auflösung eines 256 x 384 Punkte umfassenden feinen Gitters ist in Fig. 2 dargestellt. Ausgehend von, den Punkten des Durchmusterungsgitters entsprechenden, Kristallationspunkten, welche innerhalb hautfarbiger Bereiche liegen, werden jeweils deren Nachbarpunkte im feinen Gitter auf Hautfarbe hin untersucht. Hierbei wird ein bestimmter Farbbereich als hautfarbig klassifiziert. Liegt der Farbton eines Nachbarpunktes innerhalb dieses Farbbereichs, so wird der Punkt als ebenfalls zu der Hautregion zugehöriger Punkt festgehalten. In diesem Fall werden wiederum die Nachbarpunkte des neu hinzugekommenen Punktes betrachtet, so dass sich, ähnlich wie im Kristallwachstum iterativ eine gewachsene Hautregion ergibt. Die Ränder der Region ergeben sich dadurch, dass Punkte gefunden werden, deren Farbwert nicht im hautfarbigen Bereich liegt. Es handelt sich hierbei also um einen Schwellwertvergleich. Da in dem hier beschriebenen Beispielsverfahren Gesichter gesucht werden, welche Rote-Augen-Defekte aufweisen können, und diese Gesichter eine Mindestgröße aufweisen müssen, werden sehr kleine Hautgebiete, welche sich auf Grund dieses Wachstumsverfahrens ergeben, auf Grund ihrer geringen Größe wieder verworfen. Die üblichen gewachsenen Hautregionen werden in einem Verfahrensschritt 6 zur eigentlichen Suche nach Rote-Augen-Defekten verwendet. In der Fig. 3 ist das Ergebnis eines in diesem Beispiel verwendeten Wachstumsverfahrens dargestellt. Auf der Auflösung des feinen Gitters sind hier die aus dem Bild ermittelten Hautregionen deutlich zu sehen. Innerhalb dieser Hautregionen werden nun extrem rote und intensive Bildpunkte ermittelt, die sich in einer Umgebung befinden, welche einem Auge zugeordnet werden kann. Bekannte Verfahren hierfür sind Vergleiche mit Templates, das Abprüfen von Kriterien oder andere Objekterkennungsverfahren. Sobald innerhalb einer Hautregion zwei derartige rote Objekte gefunden worden sind, wird eine Verifikation dieser Objekte als Rote-Augen-Defekte vorgenommen. Dies geschieht in einem Verfahrensschritt 7, in dem mittels eines Gesichtserkennungsverfahrens überprüft wird, ob die Hautregion, welche die roten Punkte beinhaltet, verschiedentliche Kriterien eines Gesichts erfüllt. Gleichzeitig kann dabei vorteilhafterweise plausibel gemacht werden, dass die ermittelten roten Punkte innerhalb dieses möglichen Gesichts an Augenpositionen liegen. Sobald dies bestätigt wird, wird in einem Verfahrensschritt 8 die eigentliche Rote-Augen-Korrektur vorgenommen. Dies kann beispielsweise dadurch geschehen, dass alle ermittelten roten Punkte im Bereich der Augen durch dunkle Punkte ersetzt werden. Schließlich werden in einem Schritt 9 die so bearbeiteten Bilddaten wieder ausgegeben. Für die Ausgabe sind ebenso wie für die Eingabe verschiedene Speichermedien vorstellbar, es ist aber ebenso gut möglich, dass die Bilddaten auf lichtempfindliches Wiedergabematerial ausgegeben werden, so dass beispielsweise ein Foto auf Fotopapier entsteht. Es ist aber auch vorstellbar, das Rote-Augen-Erkennungsverfahren in eine gesamte Bildbearbeitungskette einzubinden und die Bilddatenausgabe nur als Bilddatenübergabe zum nächsten Bildbearbeitungsverfahrensschritt zu realisieren. Bilddateneingabe und Bilddatenausgabe haben keinen direkten Einfluss auf das eigentliche Rote-Augen-Korrekturverfahren.

## Patentansprüche

1. Automatisches Verfahren zum Erkennen von Rote-Augen-Defekten in digitalen Bilddaten von fotografischen Aufnahmen, wobei der Suche nach den Rote-Augen-Defekten eine Durchmusterung vorgeschaltet ist, bei der innerhalb der gesamten Aufnahme nach Makrobereichen gesucht wird, deren Vorkommen Voraussetzung für das Auftreten von Rote-Augen-Defekten in der Aufnahme ist, wobei die Durchmusterung auf einem Durchmusterungsgitter vorgenommen wird, dessen Anzahl an Gitterpunkten wesentlich geringer ist als die Anzahl an Bildpunkten der aufgenommenen digitalen Bilddaten, **dadurch gekennzeichnet, dass** die bei der Durchmusterung ermittelten Gitterpunkte des Durchmusterungsgitters, welche für die Makrobereiche charakteristische Eigenschaften aufweisen, als Ausgangspunkte verwendet werden, um die Gesamtfläche der Makrobereiche anhand eines feineren Gitters oder der Bilddaten zu identifizieren.

2. Verfahren nach Anspruch 1, **dadurch gekennzeichnet, dass** jedem Ausgangspunkt des Durchmusterungsgitters im feinen Gitter bzw. in den Bilddaten ein Kristallationspunkt eindeutig zugeordnet wird.

3. Verfahren nach Anspruch 2, **dadurch gekennzeichnet, dass** die Gesamtfläche der Makrobereiche identifiziert wird, indem in der Umgebung der Kristallationspunkte alle Punkte gesucht werden, welche ebenfalls die für die Makrobereiche charakteristische Eigenschaft aufweisen.

4. Verfahren nach Anspruch 2, **dadurch gekennzeichnet, dass** die Gesamtfläche der Makrobereiche identifiziert wird, indem ausgehend vom Kristallationspunkt iterativ Nachbarpunkte gesucht werden, welche ebenfalls die für die Makrobereiche charakteristische Eigenschaft aufweisen.

5. Verfahren nach Anspruch 1, **dadurch gekennzeichnet, dass** Punkte des feineren Gitters oder der Bilddaten unverändert als Gitterpunkte des Durchmusterungsgitters gewählt werden.

6. Verfahren nach Anspruch 1, **dadurch gekennzeichnet, dass** Gitterpunkte des Durchmusterungsgitters gebildet werden, indem mehrere Punkte des feinen Gitters oder der Bilddaten verarbeitet werden.

7. Verfahren nach Anspruch 1, **dadurch gekennzeichnet, dass** die Gitterpunkte des Durchmusterungsgitters gleichmäßig über das Bild verteilt werden.

8. Verfahren nach Anspruch 1, **dadurch gekennzeichnet, dass** die Gitterpunkte des Durchmusterungsgitters ungleichmäßig über das Bild verteilt werden.

9. Verfahren nach Anspruch 8, **dadurch gekennzeichnet, dass** das Durchmusterungsgitter in bildwichtigen Bereichen mehr Gitterpunkte aufweist.

10. Verfahren nach Anspruch 9, **dadurch gekennzeichnet, dass** zum Zentrum der bildwichtigen Bereiche hin zunehmend mehr Gitterpunkte angeordnet werden.

11. Verfahren nach Anspruch 1, **dadurch gekennzeichnet, dass** der maximale Abstand zwischen zwei benachbarten Gitterpunkten zwischen 2 % und 7 % der längeren Bildkante des Bildes beträgt.

12. Verfahren nach Anspruch 11, **dadurch gekennzeichnet, dass** der maximale Abstand zwischen zwei benachbarten Gitterpunkten 4% der längeren Bildkante des Bildes beträgt.

13. Verfahren nach Anspruch 1, **dadurch gekennzeichnet, dass** bei einem Bild von 2000x3000 Bildpunkten in den Bereichen großer Gitterabstände höchstens jeder 100ste Bildpunkt als Gitterpunkt gewählt wird.
